# FASCICULE DE BREVET EUROPEEN

(11) **EP 1 805 450 B1**
(45) Date de publication et mention de la délivrance du brevet: **17.04.2013**
(21) Numéro de dépôt: 05809118.2
(22) Date de dépôt: 11.10.2005
(51) Int. Cl.: F16L 59/02, F16L 59/08, B60K 15/03, B29C 65/64

(54) **ECRAN THERMIQUE POUR PIECE PLASTIQUE**
WÄRMESCHIRM FÜR EIN KUNSTSTOFFTEIL
THERMAL SCREEN FOR A PLASTIC PART

(30) Priorité: 18.10.2004 FR 0411003
(43) Date de publication de la demande: 11.07.2007
(73) Titulaire: Federal Mogul Systems Protection, 60800 Crépy-en-Valois (FR)
(72) Inventeur: JSAN, Jean-Pierre, F-60260 Lamorlaye (FR); DUMONT, Fabrice, F-60200 Compiègne (FR)
(74) Mandataire: Stankoff, Hélène
(86) Numéro de dépôt international: PCT/FR2005/002513
(87) Numéro de publication internationale: WO 2006/042935

(56) Documents cités:
- DE-A1- 3 325 034
- US-A1- 2004 038 598
- PATENT ABSTRACTS OF JAPAN vol. 006, no. 242 (M-175), 30 novembre 1982 (1982-11-30) & JP 57 140226 A (HONDA GIKEN KOGYO KK), 30 août 1982 (1982-08-30)
- PATENT ABSTRACTS OF JAPAN vol. 2003, no. 08, 6 août 2003 (2003-08-06) -& JP 2003 097372 A (HORIE METAL CO LTD; TOYOTA MOTOR CORP), 3 avril 2003 (2003-04-03)
- PATENT ABSTRACTS OF JAPAN vol. 009, no. 238 (M-416), 25 septembre 1985 (1985-09-25) & JP 60 092120 A (HONDA GIKEN KOGYO KK), 23 mai 1985 (1985-05-23)
- PATENT ABSTRACTS OF JAPAN vol. 1999, no. 02, 26 février 1999 (1999-02-26) & JP 10 291082 A (SHOWA ALUM CORP), 4 novembre 1998 (1998-11-04)

## Description

La présente invention concerne un écran thermique pour pièce plastique.

L'invention concerne de manière générale le domaine de la protection thermique de pièces plastiques, et vise plus particulièrement la protection thermique d'un réservoir à carburant d'un véhicule automobile.

Un écran thermique est utilisé pour protéger un élément plastique du rayonnement des éléments environnants, tel que par exemple un pot d'échappement dont la température peut atteindre 600°. Un tel écran thermique est décrit dans le document JP 57 140 226. A.

Un réservoir à carburant est réalisé en matière plastique du type polyéthylène et doit être maintenu à une température inférieure à 80°C.

Classiquement, on utilise un écran thermique rigide métallique, par exemple en aluminium. Cet écran rigide est disposé à distance du réservoir à carburant, et forme ainsi une coque autour du réservoir.

Ce type d'écran thermique est fixé à l'aide de vis sur le réservoir. Il est alors nécessaire de prévoir lors de la fabrication du réservoir des éléments de fixation de cet écran thermique sur le réservoir.

Ces points de fixation constituent des points de faiblesse.

En outre, l'écran thermique en forme de coque est lourd, et peut générer des bruits par vibration.

Enfin, cet écran thermique doit être disposé à distance de la surface du réservoir, de telle sorte qu'il est encombrant et génère une perte de volume utile du réservoir à carburant.

Par ailleurs, le document JP 03 097 372 enseigne la fixation par soudure à ultrasons d'un écran thermiquement isolant sur un réservoir, La soudure à ultrasons est appliquée à un écran et un réservoir en résine.

La présente invention a pour but de résoudre les inconvénients précités et de proposer un écran thermique pour protéger une pièce plastique.

La présente invention utilise un procédé de fixation d'un écran thermique sur une pièce plastique, l'écran thermique comprenant une couche en matériau réfléchissant et thermiquement conducteur et une couche en matériau thermiquement isolant destinée à être placée en vis-à-vis de la pièce plastique.

Ce procédé de fixation comprend une étape de soudure par technologie vibratoire de l'écran thermique sur la pièce plastique.

La Demanderesse a ainsi découvert qu'il était possible d'utiliser une soudure par technologie vibratoire pour fixer un écran thermique sur une pièce plastique malgré la présence d'une couche en matériau réfléchissant,

Cette technologie permet d'utiliser un écran thermique relativement souple qui peut se conformer au mieux à la forme de la pièce plastique à protéger.

La place nécessaire pour disposer l'écran thermique est ainsi limitée, En pratique, une tête vibrante génératrice de chaleur est appliquée en au moins une zone de la couche en matériau réfléchissant et thermiquement conducteur.

Grâce à l'échauffement provoqué par la tête vibrante, il est possible d'obtenir, au travers du matériau thermiquement conducteur, la fusion de la pièce plastique et éventuellement de la couche en matériau thermiquement isolant. Après refroidissement, ces matériaux sont liés au niveau du point de soudure.

De manière avantageuse, la tête vibrante est une tête à ultrasons dont la fréquence de vibration est comprise entre 20 et 40 K Hertz.

L'invention concerne ainsi un écran thermique pour pièce plastique, comprenant une couche en matériau réfléchissant et thermiquement conducteur et une couche en matériau thermiquement isolant, voir JP 57 140 226 A. Selon l'invention cet écran thermique comprend au moins une zone de marquage adaptée à identifier une zone de soudure par technologie vibratoire de l'écran thermique sur une pièce plastique.

On peut ainsi rendre apparent, par un marquage, par exemple par emboutissage, des emplacements qui correspondent ensuite aux zones de soudure lors de la fixation de l'écran thermique sur la pièce plastique.

En identifiant ainsi les points de soudure de l'écran thermique sur le réservoir, il est ainsi possible de prévoir la position des points de soudure avantageusement par rapport aux sources de radiation thermique auxquelles est exposée la pièce plastique à protéger.

D'autres particularités et avantages de l'invention apparaîtront encore dans la description ci-après.

Aux dessins annexés, donnés à titre d'exemples non limitatifs :
- la figure 1 est une vue schématique en coupe d'un écran thermique conforme à un mode de réalisation de l'invention ;
- la figure 2 est une vue schématique illustrant un procédé de fixation d'un écran thermique selon la figure 1; et
- la figure 3 est une vue en coupe transversale illustrant la fixation d'un écran thermique sur un réservoir de carburant.

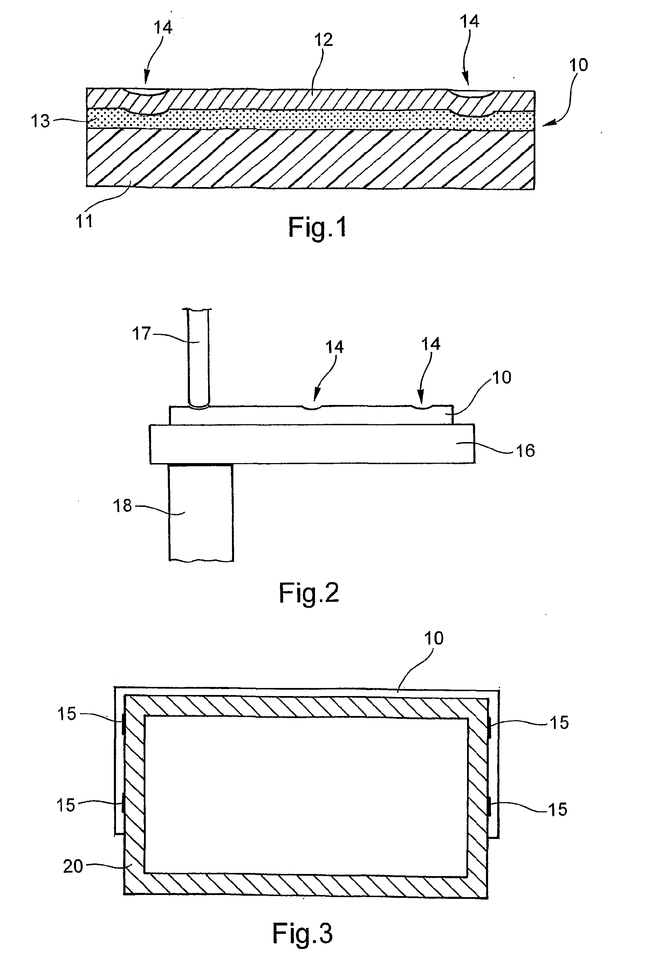

On va décrire tout d'abord en référence à la figure 1 un écran thermique pour pièce plastique conforme à un mode réalisation de l'invention.

Cet écran thermique 10 est constitué d'une structure multi couche.

Il comporte tout d'abord une couche 11 en matériau thermiquement isolant destiné à être placé en vis-à-vis de la pièce plastique à protéger.

Cette couche 11 en matériau thermiquement isolant a une épaisseur comprise entre 1 et 30 millimètres, et de préférence comprise entre 2 et 15 millimètres.

Ce matériau thermiquement isolant peut être un textile isolant thermique.

On utilise par exemple une couche d'un non-tissé en polyester.

Tout matériau thermoplastique peut convenir, et par exemple un textile du type polyéthylène.

Eventuellement, un matériau minéral peut être utilisé, du type une couche de fibre de verre.

L'écran thermique comporte en outre une couche 12 en matériau réfléchissant et thermiquement conducteur.

Cette couche de matériau réfléchissant est destinée à protéger la pièce plastique des radiations thermiques.

On peut utiliser à titre d'exemple une couche d'aluminium.

De préférence, cette couche 12 en matériau réfléchissant et thermiquement conducteur a une épaisseur comprise entre 1 micromètre et 1 millimètre, et de préférence comprise entre 25 et 500 micromètres.

Du fait de cette épaisseur relativement faible d'aluminium, l'écran thermique conforme à l'invention se présente sous la forme d'un produit multi couche semi rigide.

L'épaisseur de la couche d'aluminium n'a pas d'incidence directe sur ses propriétés de réflexion thermique.

Elle doit toutefois être suffisamment importante pour résister à la projection de gravillons, notamment lors des applications de cet écran thermique à un réservoir de carburant d'un véhicule automobile.

Ces deux couches 11, 12 sont jointes par un système classique et par exemple une colle ou un adhésif 13.

L'écran thermique 10 comprend au moins une zone de marquage, et dans l'exemple illustré à la figure 1, deux zones de marquage 14, permettant d'identifier une zone de soudure par technologie vibratoire de l'écran thermique sur une pièce plastique.

Ces zones de marquage 14 peuvent correspondre à des zones faiblement embouties dans la couche de matériau réfléchissant et thermiquement conducteur 12 de l'écran thermique 10.

On peut ainsi prévoir à l'avance les emplacements où auront lieu les points de soudure de l'écran thermique sur une pièce plastique.

On va décrire à présent en référence à la figure 2 un procédé de fixation d'un écran thermique 10 tel que décrit précédemment sur une pièce plastique 16.

A titre d'exemple, cette pièce plastique 16 peut constituer un réservoir à carburant et être par exemple en polyéthylène.

Pour réaliser cette fixation, on utilise la soudure par technologie vibratoire de l'écran thermique sur la pièce plastique.

En pratique, cet écran thermique 10 est disposé de telle sorte que la couche 11 en matériau thermiquement isolant est en contact avec la pièce plastique 16 à protéger.

On applique ensuite une tête vibrante 17 génératrice de chaleur. Cette tête vibrante est appliquée en au moins un point de la couche 12 en matériau réfléchissant et thermiquement conducteur.

Comme illustré à la figure 2, cette tête vibrante 12 est appliquée sur une zone de marquage prédéterminée 14 dans l'écran thermique.

Dans ce mode de réalisation, on utilise une soudure par ultrasons, la tête vibrante ayant une fréquence de vibration comprise entre 20 et 40 K Hertz.

On pourrait également utiliser un principe de soudure à haute fréquence.

Dans son principe, une tête à ultrasons est mise en vibration, cette vibration provoquant l'échauffement de la tête.

Cette tête 17 est appliquée avec une certaine pression sur l'écran thermique 10 en contact avec la pièce plastique 16, un contre-outil 18 étant disposé en contact avec la pièce plastique 16 au droit de la tête vibrante 17.

Malgré la présence de la couche 12 en aluminium, on obtient la fusion du matériau plastique 16 et éventuellement de la couche de matériau thermiquement isolant 11 au niveau du point de soudure 15.

Au moment du refroidissement, ces deux matériaux sont liés au niveau de point de soudure 15.

On notera que lorsqu'on utilise une couche 11 en fibre de verre, dont la température de fusion est de l'ordre de 1000°C, cette couche de fibre de verre ne fond pas lors de l'étape de soudure. Seule la pièce plastique 16 se ramollit suffisamment pour permettre la jonction et la soudure de cette couche de fibre de verre 11 sur la pièce plastique 16.

A contrario, lorsqu'on utilise un textile non tissé en polyester comme couche isolante 11, celle-ci présente une température de fusion d'environ 250°C.

Lors de l'application de la tête de soudure par ultrasons, on obtient à la fois le ramollissement de cette couche en polyester 11 et du matériau plastique 16 de telle sorte que la jonction par soudure des deux composants peut être obtenue grâce à la pression exercée par la tête 17 et le contre outil 18.

Cette soudure est obtenue quel que soit le matériau thermoplastique utilisé dans la couche de matériau thermiquement isolant.

On a illustré à titre d'exemple sur la figure 3 la fixation par soudure d'un écran thermique 10 sur un réservoir de carburant 20.

On notera qu'il peut être important de décaler les points de soudure 15 par rapport aux sources de radiation thermique auxquelles est soumis le réservoir de carburant 20, dès lors que ces points de soudure 15 constituent nécessairement des points de faiblesse pour la réflexion des radiations thermiques.

Grâce à ce procédé de fixation par soudure par technologie vibratoire de l'écran thermique sur une pièce plastique, il n'est plus nécessaire de prévoir des points d'ancrage pour un écran thermique sur le réservoir lors du moulage de celui-ci.

En outre, l'écran thermique étant appliqué directement au contact avec le réservoir, on obtient un gain de place important par rapport à l'utilisation d'un écran thermique rigide sous forme de coque qui ne peut se conformer exactement au contour extérieur du réservoir. On peut ainsi augmenter le volume utile du réservoir de carburant.

L'écran thermique conforme à l'invention présente en outre un gain de poids par rapport à un écran thermique rigide et ne génère pas de bruits par vibration.

Il est en outre aisé de modifier l'écran thermique pour s'adapter à tout type de formes de réservoir de carburant.

Bien entendu, la présente invention ne se limite pas aux exemples décrits précédemment.

En particulier, l'écran thermique conforme à l'invention pourrait être fixé sur tout type de pièces plastiques, dans de multiples applications de protection thermique.

## Revendications

1. Ecran thermique pour pièce plastique, comprenant une couche (12) en matériau réfléchissant et thermiquement conducteur et une couche (11) en matériau thermiquement isolant, **caractérisé en ce qu'**il comprend au moins une zone de marquage (14) adaptée à identifier une zone de soudure (15) par technologie vibratoire dudit écran thermique (10) sur une pièce plastique (16, 20).

2. Ecran thermique conforme à la revendication 1, **caractérisé en ce que** ladite zone de marquage (14) est une zone faiblement emboutie dans ladite couche (12) de matériau réfléchissant et thermiquement conducteur de l'écran thermique (10).

3. Ecran thermique conforme à l'une des revendications 1 ou 2, **caractérisé en ce que** ladite couche (12) en matériau réfléchissant et thermiquement conducteur a une épaisseur comprise entre 1 micromètre et 1 millimètre.

4. Ecran thermique conforme à la revendication 3, **caractérisé en ce que** ladite couche (12) en matériau réfléchissant et thermiquement conducteur a une épaisseur comprise entre 25 et 500 micromètres.

5. Ecran thermique conforme à l'une des revendications 1 à 4, **caractérisé en ce que** ladite couche (12) en matériau réfléchissant et thermiquement conducteur est en aluminium.

6. Ecran thermique conforme à l'une des revendications 1 à 5, **caractérisé en ce que** la couche (11) en matériau thermiquement isolant a une épaisseur comprise entre 1 et 30 millimètres.

7. Ecran thermique conforme à la revendication 6, **caractérisé en ce que** ladite couche (11) en matériau thermiquement isolant a une épaisseur comprise entre 2 et 15 millimètres.

8. Ecran thermique conforme à l'une des revendications 1 à 7, **caractérisé en ce que** ladite couche (11) en matériau thermiquement isolant est un textile thermiquement isolant.

9. Ecran thermique conforme à la revendication 8, **caractérisé en ce que** ladite couche (11) en textile thermiquement isolant est un textile non-tissé en polyester.

10. Ecran thermique conforme à la revendication 8, **caractérisé en ce que** ladite couche (11) en textile thermiquement isolant est une couche de fibre de verre.

## Claims

1. Thermal screen for plastic part, comprising a reflective and thermally conductive material layer (12) and a thermally insulative material layer (11), **characterised in that** it comprises at least one marking area (14) adapted to identify an area (15) of vibrational technology welding of said thermal screen (10) to a plastic part (16, 20).

2. Thermal screen according to claim 1, **characterised in that** said marking area (14) is an area lightly stamped in said reflective and thermally conductive material layer (12) of the thermal screen (10).

3. Thermal screen according to either one of claims 1 or 2, **characterised in that** said reflective and thermally conductive material layer (12) has a thickness from 1 micrometre to 1 millimetre.

4. Thermal screen according to claim 3, **characterised in that** said reflective and thermally conductive material layer (12) has a thickness from 25 to 500 micrometres.

5. Thermal screen according to any one of claims 1 to 4, **characterised in that** said reflective and thermally conductive material layer (12) is of aluminium.

6. Thermal screen according to any one of claims 1 to 5, **characterised in that** the thermally insulative material layer (11) has a thickness from 1 to 30 millimetres.

7. Thermal screen according to claim 6, **characterised in that** said thermally insulative material layer (11) has a thickness from 2 to 15 millimetres.

8. Thermal screen according to any one of claims 1 to 7, **characterised in that** said thermally insulative material layer (11) is a thermally insulative textile.

9. Thermal screen according to claim 8, **characterised in that** said thermally insulative textile layer (11) is a non-woven polyester textile.

10. Thermal screen according to claim 8, **characterised in that** said thermally insulative textile layer (11) is a glass fibre layer.

## Patentansprüche

1. Hitzeschild für ein Kunststoffteil, enthaltend eine Schicht (12) aus einem reflektierenden und wärmeleitenden Material und eine Schicht (11) aus einem wärmeisolierenden Material, **dadurch gekennzeichnet, dass** er zumindest einen Markierungsbereich (14) aufweist, der dazu geeignet ist, einen Anschweißbereich (15) zum Anschweißen des Hitzeschilds (10) an ein Kunststoffteil (16, 20) durch Vibrationstechnik zu identifizieren.

2. Hitzeschild nach Anspruch 1,
**dadurch gekennzeichnet, dass** der Markierungsbereich (14) ein in die aus einem reflektierenden und wärmeleitenden Material bestehende Schicht (12) des Hitzeschilds (10) geringfügig eingedrückter Bereich ist.

3. Hitzeschild nach einem der Ansprüche 1 oder 2,
**dadurch gekennzeichnet, dass** die Schicht (12) aus reflektierendem und wärmeleitendem Material eine Dicke von zwischen 1 Mikrometer und 1 Millimeter hat.

4. Hitzeschild nach Anspruch 3,
**dadurch gekennzeichnet, dass** die Schicht (12) aus reflektierendem und wärmeleitendem Material eine Dicke von zwischen 25 und 500 Mikrometer hat.

5. Hitzeschild nach einem der Ansprüche 1 bis 4,
**dadurch gekennzeichnet, dass** die Schicht (12) aus reflektierendem und wärmeleitendem Material aus Aluminium besteht.

6. Hitzeschild nach einem der Ansprüche 1 bis 5,
**dadurch gekennzeichnet, dass** die Schicht (11) aus wärmeisolierendem Material eine Dicke von zwischen 1 und 30 Millimeter hat.

7. Hitzeschild nach Anspruch 6,
**dadurch gekennzeichnet, dass** die Schicht (11) aus wärmeisolierendem Material eine Dicke von zwischen 2 und 15 Millimeter hat.

8. Hitzeschild nach einem der Ansprüche 1 bis 7,
**dadurch gekennzeichnet, dass** die Schicht (11) aus wärmeisolierendem Material eine wärmeisolierende Textilschicht ist.

9. Hitzeschild nach Anspruch 8,
**dadurch gekennzeichnet, dass** die Schicht (11) aus wärmeisolierendem Textilmaterial ein Vliesstoff aus Polyester ist.

10. Hitzeschild nach Anspruch 8,
**dadurch gekennzeichnet, dass** die Schicht (11) aus wärmeisolierendem Textilmaterial eine Schicht aus Glasfaser ist.
